# EUROPÄISCHE PATENTANMELDUNG

(11) **EP 2 894 595 A1**
(43) Veröffentlichungstag der Anmeldung: **15.07.2015**
(21) Anmeldenummer: 14152328.2
(22) Anmeldetag: 23.01.2014
(51) Int. Cl.: G06Q 20/40, G07F 9/02, G07F 17/32, G07F 19/00, G07C 9/00

(54) **Geldwertbetätigtes Gerät**

(30) Priorität: 14.01.2014 EP 14151202
(71) Anmelder: Novomatic AG, 2352 Gumpoldskirchen (AT)
(72) Erfinder: Schwerdling, Dirk, 56228 Kastellaun (DE)
(74) Vertreter: Müller, Jochen

(57) **Zusammenfassung**

Ein geldwertbetätigtes Gerät umfasst eine Einrichtung (76) zur Kontrolle und Aktivierung einer Nutzungsberechtigung, eine Geldwertverarbeitungseinrichtung (61) und eine rechnergesteuerte Steuereinheit (60), wobei die Einrichtung (76) zur Kontrolle der Nutzungsberechtigung eine Erkennungseinrichtung (57) zur Aufnahme eines biometrischen Merkmals eines Benutzers und eine Vergleichseinrichtung zum Vergleich des aufgenommenen biometrischen Merkmals mit in einem Speicher (79) gespeicherten Vergleichsdaten umfasst, wobei die Aktivierung der Nutzungsberechtigung bei Übereinstimmung des aufgenommenen biometrischen Merkmals mit den gespeicherten Vergleichsdaten erfolgt; und wobei Mittel zum Hinzufügen und/oder Entfernen von Vergleichsdaten von Benutzern in/aus den/dem Speicher (79) vorgesehen sind.

## Beschreibung

Die Erfindung bezieht sich auf ein geldwertbetätigtes Gerät mit einer Einrichtung zur Kontrolle und Aktivierung einer Nutzungsberechtigung, einer Geldwertverarbeitungseinrichtung und einer rechnergesteuerten Steuereinheit und ein Verfahren zum Betreiben eines geldwertbetätigten Gerätes.

Die DE 93 00 937 U1 offenbart einen Verkaufsautomaten mit einer Einrichtung zur bargeldlosen und/oder münzbetätigten Warenausgabe, wobei der Verkaufsautomat mit Wähltasten zur Auswahl der jeweils gewünschten Ware und einer elektrischen/elektronischen Steuerung zur Ausgabe der Waren, einer Münzeingabe mit einer Prüf- und Erkennungseinrichtung für die eingegebenen Münzen sowie der Summe der eingegebenen Münzen versehen ist. Insbesondere bei der bargeldlosen Warenausgabe werden vom Benutzer benutzerbezogene Daten bei der Bedienung des Verkaufsautomaten eingegebenen und gespeichert. Bei Eingabe und Erkennung von Daten eines zur bargeldlosen Benutzung des Verkaufsautomaten berechtigten Benutzers wird die Ausgabe einer ausgewählten Ware freigegeben. Zur Eingabe benutzerbezogener Daten ist in dem Verkaufsautomaten ein Kartenlesegerät angeordnet, in das über einen Karteneingabeschlitz benutzerindividuell programmierte und/oder codierte Karten einschiebbar sind. Das Kartenlesegerät ist mit einer Prüfeinheit verbunden, die mit einer Tastatur zur Eingabe eines benutzerspezifischen Zahlencodes und einer Warenfreigabeeinrichtung verbunden ist, die bei Akzeptanz von Karte und Zahlencode durch die Prüfeinheit Wähltasten für Fächer zur Aufnahme von Waren zur Warenentnahme freigibt. Nach Beendigung der Warenentnahme und Sperrung des Verkaufsautomaten wird die Karte aus dem Kartenlesegerät ausgegeben und durch einen Drucker ein Beleg über den entnommenen Warenwert ausgedruckt. Ein solcher Verkaufsautomat, der in der Regel öffentlich zugänglich aufgestellt ist, eignet sich nicht zum Verkauf von Waren, deren Abgabe beispielsweise gesetzlicher Bestimmungen unterliegt, da keine wirksame Nutzungskontrolle hinsichtlich der Berechtigung desjenigen, der im Besitz von Karte und Zahlencode ist, vorgenommen wird. Die Karte kann mitsamt dem Zahlencode an einen Dritten weitergegeben werden bzw. ein Dritter kann sich unberechtigten Zugang zu Karte und Zahlencode verschaffen und sonach den Verkaufsautomaten benutzen.

Im Weiteren verfügt jeder Benutzer von elektronischen Diensten und/oder Geräten, die einer Zugangsberechtigung unterliegen, über eine relativ große Anzahl von Geheimzahlen (PINs) also Zahlencodes, die stets mit oder ohne Verwendung einer Chipkarte dem jeweiligen Dienst bzw. Gerät richtig zugeordnet und niemals vergessen werden dürfen, wodurch sich ein Problem bei der Verwendung einer Chipkarte in Verbindung mit einer Geheimzahl ergibt.

Um eine unberechtigte Weitergabe bzw. Aneignung einer Karte mit Zahlencode und deren gemeinsame Verwendung bzw. das Vergessen einer Geheimzahl auszuschließen, ist aus der DE 197 42 835 A1 eine Chipkarte in Kombination mit einer oder mehreren Vorrichtungen zur Erfassung von biometrischen Merkmale in Form von Schrift, Stimme und Fingerabdruck bekannt. Die Chipkarte nimmt beim Schreiben die durch den Stift ausgeübten Schreibkräfte auf, ist mit einem Mikrofon zur Stimmerfassung und einem Element zur Erfassung der Tastlinien eines Fingers versehen, wobei die wertabhängig vorwählbaren Kennfelder der biometrischen Merkmale auf dem Chip gespeichert sind und von dort zum Vergleich mit dem gerade auf der Chipkarte abgegebenen biometrischen Merkmal herangezogen werden. Die Energieversorgung sowie der Datenaustausch der Chipkarte mit einem übergeordneten Rechner erfolgt kontaktlos und/oder kontaktbehaftet. Zur Verwendung der Chipkarte wird diese am Ort der Abgabe des biometrischen Merkmals auf ein gekennzeichnetes Feld gelegt oder in einen üblichen Chipkartenleser eingeführt. In diesem Feld oder Chipkartenleser sind die benötigten Vorrichtungen zum Datenaustausch mit einem übergeordneten Rechner integriert. Als nachteilig erweist sich hierbei der komplexe und teure Aufbau der Chipkarte und des damit verbundenen Chipkartenlesers.

Darüber hinaus sind geldbetätigte Unterhaltungsgeräte bekannt, die in der Regel in Spielhallen aufgestellt werden, wobei Aufsichtspersonal eine Benutzung der Unterhaltungsgeräte durch nicht zur Benutzung berechtigte Personen verhindern soll.

Es ist Aufgabe der Erfindung, ein geldbetätigtes Gerät und ein Verfahren zum Betreiben eines geldwertbetätigten Gerätes der eingangs genannten Art zu schaffen, das über eine wirksame und für eine Anzahl an Benutzer einfach zu bedienende Einrichtung zur Kontrolle und Aktivierung der Nutzungsberechtigung verfügt bzw. sicherstellt.

Erfindungsgemäß wird die Aufgabe durch die Merkmale der unabhängigen Ansprüche gelöst.

Die Unteransprüche stellen vorteilhafte Ausgestaltungen der Erfindung dar.

Ein geldwertbetätigtes Gerät umfasst eine Einrichtung zur Kontrolle und Aktivierung einer Nutzungsberechtigung, eine Geldwertverarbeitungseinrichtung und eine rechnergesteuerten Steuereinheit, wobei die Einrichtung zur Kontrolle der Nutzungsberechtigung eine Erkennungseinrichtung zur Aufnahme eines biometrischen Merkmals eines Benutzers und eine Vergleichseinrichtung zum Vergleich des aufgenommenen biometrischen Merkmals mit in einem Speicher gespeicherten Vergleichsdaten umfasst, wobei die Aktivierung der Nutzungsberechtigung bei Übereinstimmung des aufgenommenen biometrischen Merkmals mit den gespeicherten Vergleichsdaten erfolgt; und wobei Mittel zum Hinzufügen und/oder Entfernen von Vergleichsdaten von Benutzern in/aus den/dem Speicher vorgesehen sind.

Aufgrund dieser Maßnahmen umfasst das Gerät eine sehr wirksame Einrichtung zur Kontrolle der Nutzungsberechtigung, da nach entsprechender Registrierung der biometrischen Merkmale nur der Berechtigte Zugang zur Nutzung des Gerätes erhält. Darüber hinaus ist durch die erforderliche Kontrolle der biometrischen Merkmale eine Übertragung der Nutzungsberechtigung an Dritte ausgeschlossene. Im Weiteren ist ein Verlust oder Vergessene von Mitteln und Daten, die zur Nutzung des Gerätes berechtigen unmöglich, da die biometrischen Merkmale eines Benutzers stets bei ihm selbst vorhanden und über einen relativ langen Zeitraum unveränderlich sind. Die Vergleichseinrichtung stellt ein von außen nahezu unbeeinflussbares Werkzeug zur zuverlässigen Überprüfung der von der Erkennungseinrichtung aktuell Empfangenen Daten mit entsprechenden Vergleichsdaten dar. Durch die Mittel zum Hinzufügen und/oder Entfernen von Vergleichsdaten von Benutzern in/aus den/dem Speicher ist es möglich, neue Benutzer zur bestimmungsgemäßen Verwendung zu registrieren, in dem biometrische Daten als Vergleichsdaten in dem Speicher hinterlegt werden. Dieser Vorgang kann beispielsweise durch Aufsichtspersonal oder in Anwesenheit von Aufsichtspersonal erfolgen, das vor der Erfassung und/oder Speicherung der Vergleichsdaten den Benutzer dahingehend kontrolliert, dass er zur Benutzung des Gerätes berechtigt ist, also beispielsweise ein bestimmtes Alter aufweist oder nicht auf einer Sperrliste aufgeführt ist. Sollte ein Benutzer, dessen Vergleichsdaten gespeichert sind, aus dem Kreis der Berechtigten herausfallen, können seine Vergleichsdaten durch das Aufsichtspersonal oder Servicepersonal aus dem Speicher gelöscht werden. Wenn keine zur Nutzung des Gerätes berechtigenden Vergleichsdaten in dem Speicher vorhanden sind, kann eine Nutzungsberechtigung, die eine bestimmungsgemäße Nutzung des Gerätes ermöglicht, nicht festgestellt werden. Beispielsweise kann sich eine fehlende Nutzungsberechtigung derart auswirken, dass das Gerät durch einen Benutzer nicht bedient werden kann, also eine bestimmungsgemäße Nutzung nicht möglich ist. Es ist auch möglich, dass bei einer fehlenden Nutzungsberechtigung die Geldwertwertverarbeitungseinrichtung deaktiviert wird, so dass keine Bezahlung und damit auch kein nachfolgender bestimmungsgemäßer Betrieb des Gerätes möglich ist.

Der verwendete Speicher zur Hinterlegung des biometrischen Merkmals kann Bestandteil der Erkennungseinrichtung oder eines separaten Speichermediums zur Speicherung weiterer geräterelevanter Daten sein.

Als biometrische Merkmale lassen sich Stimm- und Sprachmerkmale eines Benutzers verwenden, weshalb die Erkennungseinrichtung eine Tonaufnahmeeinrichtung zur Aufnahme von. Stimm- und Sprachmerkmale umfasst. Stimm- und Sprachmerkmale stellen neben Fingerabdrücken, Gesichts-Merkmalen, Augen-Iris-Merkmalen und dergleichen, ebenfalls individuelle biometrische Merkmale dar, die entsprechend aufbereitet speicherbar und zur Identifizierung eines Benutzers mit Vergleichsdaten vergleichbar sind.

In Ausgestaltung sind die Mittel zum Hinzufügen und/oder Entfernen von Vergleichsdaten durch einen Schlüsselschalter oder eine Fernbedienungseinrichtung aktivierbar. Häufig sind gattungsgemäße Geräte mit einem Schlüsselschalter ausgestattet, in dessen unterschiedlichen Schaltstellungen von einem Inhaber des Schlüssels beispielsweise das Gerät aus einem Betriebsmodus in einen Servicemodus umschaltbar ist, wobei in dem Servicemodus beispielsweise Statistik-Daten des Gerätes auslesbar oder Software aufspielbar ist. Dementsprechend kann die Schaltstellung des Schlüsselschalters Servicemodus oder eine weitere Schaltstellung, die mit "Lernmodus" bezeichnet werden kann, genutzt werden, um biometrische Daten, die zur Nutzungsberechtigung des Gerätes führen in den Speicher einzuschreiben oder aus dem Speicher zu löschen, wobei diese Vorgänge unter Anwesenheit des mit dem entsprechenden Schlüssel ausgestatteten Aufsichtspersonal erfolgen. Zur Erfassung der der biometrischen Daten, die in den Speicher eingeschrieben werden sollen kann die Erkennungseinrichtung des Gerätes oder eine externe Erkennungseinrichtung verwendet werden. Selbstverständlich muss es sich bei dem Schlüsselschalter nicht um ein elektromechanisches Bauteil handeln, es kann auch ein codierter elektrischer/elektronischer Schlüssel, beispielsweise in Form eines sogenannten RFID-Chips, Verwendung finden. Alternativ zu dem Schlüsselschalter ist die Verwendung einer mindestens eine Sende- und Empfangseinrichtung umfassenden Fernbedienungseinrichtung denkbar, wobei das Aufsichtspersonal mittels einer Sendeeinrichtung eine im Gerät vorhandene Empfangseinrichtung anspricht, um das Gerät in einen Zustand zu versetzen, in dem das Hinzufügen oder Entfernen von Vergleichsdaten möglich ist. Durch eine Beschränkung des Sendebereichs kann sichergestellt werden, dass sich das Aufsichtspersonal in unmittelbarer Nähe des Gerätes befindet, wenn die Vergleichsdaten hinzugefügt oder entfernt werden, so dass auch eine Prüfung des künftigen Nutzers des Gerätes zumindest durch Inaugenscheinnahme möglich ist.

Bevorzugt umfasst die Erkennungseinrichtung eine Aufnahmeeinrichtung zur Aufnahme eines Fingerabdruckes eines Benutzers. Der Fingerabdruck ist ein relativ einfach von der Aufnahmeeinrichtung zu erkennendes biometrisches Merkmal des Benutzers, dessen Daten nach entsprechender Digitalisierung als Vergleichsdaten zu speichern und zu überprüfen sind. Ferner ist die Einrichtung zur Kontrolle der Nutzungsberechtigung überaus einfach zu Bedienen, da keine umfangreichen Daten manuell in das Gerät eingegeben werden müssen, das Auflegen des Fingers mit dem registrierten Fingerabdruck ist ausreichend um die Nutzungsberechtigung zu aktivieren oder Daten zum speichern als Vergleichsdaten zu erhalten.

Die Erkennungseinrichtung kann eine Aufnahmeeinrichtung zur Aufnahme eines Fingerabdruckes und weiterer biometrischer Merkmale des Benutzers umfassen, wodurch die Erkennungseinrichtung zur Kontrolle der Nutzungsberechtigung des Gerätes eine wirksame Zugangskontrolle mit einem relativ hohen Sicherheitsstandard darstellt, da sie mehrere eindeutig identifizierbare biometrische Merkmale des Benutzers aufnimmt und anhand entsprechend zuvor hinterlegter Vergleichsdaten überprüft.

Zweckmäßigerweise ist die Aufnahmeeinrichtung als eine Kamera oder ein Flächensensor ausgebildet. Sowohl die Kamera als auch der Flächensensor liefern für einen Vergleich hinreichend exakte Darstellungen bzw. Daten des aufgenommenen Fingerabdrucks.

Bevorzugt ist die Aufnahmeeinrichtung in einen Ein-/ Ausschalter oder in einen Auswahlschalter oder ein Gehäuseteil des Gerätes integriert. Der Benutzer des Gerätes berührt zwangsläufig ein Betätigungselement eines entsprechenden Schalters und führt hierbei in der Regel seinen Finger der Aufnahmeeinrichtung für den Fingerabdruck zu, weshalb keine zusätzlichen Handlungen zur Überprüfung der Nutzungsberechtigung notwendig sind. Bei dem Gehäuseteil kann es sich um ein Pult handeln, das zur Aufnahme weiterer Bedienelemente vorgesehen ist.

Nach einer alternativen Ausgestaltung des Erfindungsgedankens ist die Aufnahmeeinrichtung in einer einen Finger zumindest teilweise aufnehmende Öffnung eines Gehäuses installiert. Dem Benutzer wird beim einlegen seines Fingers in die mit der Aufnahmeeinrichtung versehene Öffnung bewusst, dass er hiermit seine Nutzungsberechtigung überprüfen lässt.

Nach einer vorteilhaften Ausgestaltung der Erfindung sind die Vergleichsdaten zur Aktivierung der Nutzungsberechtigung auf einem lokalen Speichermedium gespeichert. Hierdurch ist eine relativ hohe Sicherheit gegen unbefugte Manipulation der Daten gewährleistet und die Vergleichsdaten können geräteabhängig hinterlegt werden. Zweckmäßigerweise ist das Speichermedium fest installiert oder austauschbar. Im Falle eines austauschbaren Speichermediums ist eine Aktualisierung der Vergleichsdaten, die beispielsweise nach der Registrierung zusätzlicher Benutzer des Gerätes erforderlich wird, relativ einfach sichergestellt, da die entsprechenden Daten von einer Registrierungsstelle aufbereitet und auf einem geeigneten Speichermedium gesichert und anschließend an den Betreiber des Gerätes gesendet werden können, der dann das vorhandene Speichermedium gegen das aktualisierte austauscht.

Bevorzugt umfasst die Geldwertverarbeitungseinrichtung einen Münz- und/oder Geldscheinprüfer und/oder ein Kartenlesegerät und/oder ein Papierticketmodul (TiTo) und/oder Tokenprüfer. Hiernach stehen dem Benutzer des Gerätes mehrere Möglichkeiten zur Verfügung um das Gerät nach der Aktivierung der Nutzungsberechtigung zu betreiben.

Nach einer bevorzugten Weiterbildung des Erfindungsgedankens ist das Gerät gekennzeichnet durch eine Ausgestaltung als Unterhaltungsspielgerät, Multimediacomputer, Warenverkaufsautomat oder dergleichen. Die Ausgestaltungen beziehen sich in erster Linie aber nicht ausschließlich auf solche Geräte, deren Benutzung bestimmten Voraussetzungen an den Benutzer unterliegen. Beispielsweise kann ein registrierter Benutzer eines frei zugänglich aufgestellten Multimediacomputers oder Unterhaltungsgerätes, nach entsprechender Nutzungsfreigabe und Bezahlung, Spiele abrufen und durchführen, die einer Alterskontrolle unterliegen. Bei der Ausgestaltung des Gerätes als öffentlich zugänglicher Warenverkaufsautomat ist beispielsweise der Verkauf von Spirituosen oder Zigaretten, der in der Regel einer Alterskontrolle unterliegt, an entsprechend berechtigte Benutzer nach Bezahlung möglich.

Nach einer weiteren vorteilhaften Ausgestaltung der Erfindung, bei der dem Gerät mindestens ein Gerät gleicher Art zugeordnet ist, erfolgt die Zuordnung der Geräte über ein mit einem Zentralrechner ausgestattetes Netzwerk, wobei die Vergleichsdaten zur Aktivierung der Nutzungsberechtigung auf dem Zentralrechner gespeichert sind. Dieses Netzwerk stellt eine komfortable Lösung zur Verwaltung der Vergleichsdaten und zur Überwachung der dem Netzwerk zugeordneten Geräte dar, wobei die Geräte an unterschiedlichen Orten aufgestellt sein können. Ferner besteht für den Benutzer die Möglichkeit ein beliebiges Gerät des Netzwerkes zu aktivieren.

Um einen unbefugten Zugriff auf das Gerät zu verhindern, erfolgt vorteilhafterweise eine Deaktivierung der Nutzungsberechtigung zeit- oder tastengesteuert.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörige Zeichnung näher erläutert.

Es zeigt:
- Fig. 1: eine Vorderansicht eines erfindungsgemäßen Gerätes in einer ersten Ausführungsform als Unterhaltungsspielgerät,
- Fig. 2: eine Vorderansicht des erfindungsgemäßen Gerätes in einer ersten alternativen Ausführungsform als Warenverkaufsautomat,
- Fig. 3: eine perspektivische Ansicht des erfindungsgemäßen Gerätes in einer zweiten alternativen Ausführungsform als Multimediacomputer,
- Fig. 4: eine vereinfachte perspektivische Darstellung des erfindungsgemäßen Gerätes einer dritten alternativen Ausführungsform als Unterhaltungsspielgerät mit geschlossener Fronttür,
- Fig. 5: eine Vorderansicht des Unterhaltungsspielgerätes nach Fig. 4 mit geöffneter Fronttür,
- Fig. 6: eine schematische Darstellung einer als ein Fingerprint-Scanner-Modul ausgebildeten Aufnahmeeinrichtung zur Verwendung mit dem erfindungsgemäßen Gerät und
- Fig. 7: eine Darstellung des Fingerprint-Scanner-Moduls nach Fig.6.

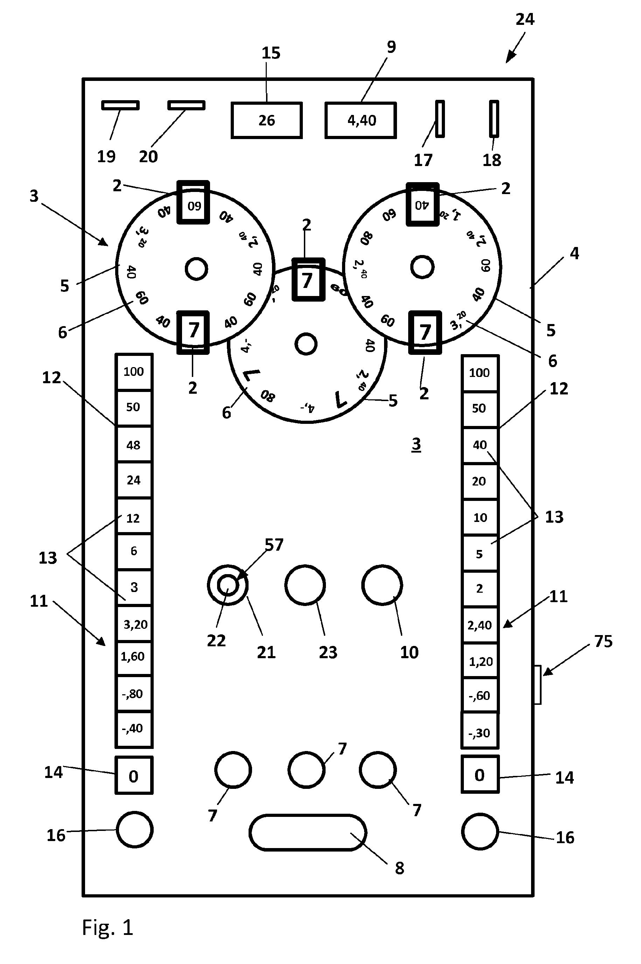

Das rechnergesteuerte Gerät, das gemäß Fig. 1 als Unterhaltungsgerät 24 ausgebildet ist, umfasst eine Frontscheibe 1 mit Ablesefenstern 2 für eine Symbol-Spieleinrichtung 3, die in einem Gehäuse 4 aufgenommen ist, wobei hinter den Ablesefenstern 2 scheibenförmige Umlaufkörper 5 der Symbol- Spieleinrichtung 3 vorgesehen sind. Die Umlaufkörper 5 werden nach dem Inlaufsetzen zu Spielbeginn während oder zum Ende des Spiels von einem Zufallsgenerator der hier nicht dargestellten Steuereinheit in einer von einer Mehrzahl möglicher Positionen zum Stillstand gebracht. Den Rastpositionen sind auf dem Umfang der Umlaufkörper 5 Symbole 6 zugeordnet, die der Anzeige des Spielergebnisses in den Ablesefenstern 2 dienen. Aus den angezeigten Symbolen 6 kann der Spieler das Spielergebnis ablesen, insbesondere auch, ob sich ein Gewinn nach einem auf der Frontscheibe 1 erläuterten Gewinnplan aus einer Kombination der angezeigten Symbole 6 ergeben hat.

Im unteren Bereich des Unterhaltungsgerätes 24 befinden sich drei, den Umlaufkörpern 5 zugeordnete Tasten 7, mit denen die in der Symbol-Spieleinrichtung 3 angezeigten Symbole 6 der Umlaufkörper 5 vorzeitig angehalten bzw. nachgestartet werden können. Im Falle eines Gewinns durch Erreichen einer bestimmten Symbolkombination kann eine Gewinnausschüttung in bar, d. h. durch Geldausgabe in eine Ausgabeschale 8, oder durch Aufaddieren in einer Guthabenanzeige 9 erfolgen, wobei das aufaddierte Guthaben mittels Betätigung einer Speichertaste 10 speicherbar ist.

Der in der Symbol-Spieleinrichtung 3 durch Erreichung einer zufallsgesteuert ermittelten Symbolkombination erzielte Gewinn kann tasten- oder rechnergesteuert als Einsatz in eine der jeweils als Zusatzgewinn-Spieleinrichtung ausgebildeten Risiko-Spieleinrichtung 11 übertragen werden.

Um ein Spiel des Unterhaltungsgerätes 24 zu beginnen, ist es notwendig ein Guthaben zu erzielen. Hierzu sind im oberen Bereich des Unterhaltungsgerätes 24 ein Münzeinwurfschlitz 17, ein Tokeneinwurfschlitz 18, ein Geldschein-Eingabeschlitz 19 sowie ein Karten-Eingabeschlitz 20 einer nicht näher dargestellten Geldwertverarbeitungseinrichtung vorgesehen. Nach der Eingabe eines bestimmten Geldwertes ist die Nutzungsberechtigung des Unterhaltungsgerätes 24 zu aktivieren, wozu der Benutzer des Unterhaltungsgerätes 24 einen als Start-Schalter 21 ausgebildeten Auswahlschalter betätigt. In den Start-Schalter 21 ist eine als Aufnahmeeinrichtung 22 ausgestaltete Erkennungseinrichtung 57 zur Aufnahme eines zuvor registrierten und in dem Unterhaltungsgerät 24 abgespeicherten Fingerabdruckes des Benutzers vorgesehen.

Bei der Berührung des Start-Schalters 21 erstellt die als Miniaturkamera oder als CCD-Flächensensor ausgebildete Aufnahmeeinrichtung 22 ein Abbild des Fingerabdruckes, der in entsprechende Signale umgewandelt und an eine Vergleichseinrichtung des Unterhaltungsgerätes 24 weitergeleitet wird. Die Vergleichseinrichtung vergleicht die von der Aufnahmeeinrichtung 22 übernommenen Signale mit Vergleichsdaten, die bei der Registrierung des Fingerabdruckes erstellt und in dem Unterhaltungsgerät 24 abgespeichert werden.

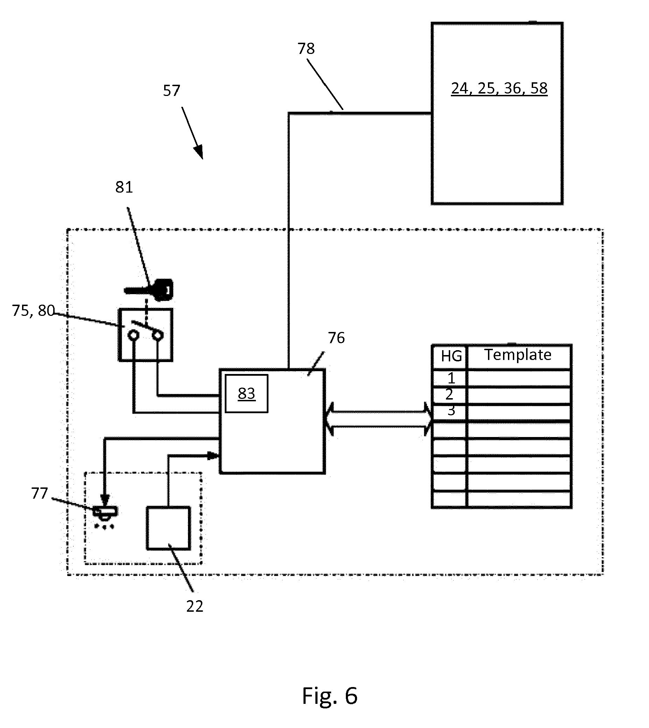

Fig. 6 zeigt gemäß einem Ausführungsbeispiel die Aufnahmeeinrichtung 22 als Fingerprint-Scanner-Modul, ausgebildet. Das Fingerprint-Scanner-Modul verfügt über Einrichtung 76 zur Kontrolle und Aktivierung einer Nutzungsberechtigung, und ein LED-Leuchtband 61, welches beispielsweise ringförmig um jenen Bereich des Fingerprint-Scanner-Moduls angeordnet ist, der zur Erfassung des Fingerabdrucks vorgesehen ist und im Folgenden auch als Fingerabdrucksensor 73 bezeichnet wird. Das LED-Leuchtband 77 kann bei Anordnung von RGB-LEDs mehrere Farben darstellen. Diese Farben geben Informationen über den Status bzw. den Modus in dem sich das Fingerprint-Scanner-Modul gerade befindet.

Beispielsweise sind den folgend angeführten Funktionen des Fingerprint-Scanner-Moduls die entsprechenden Farben zugeordnet, die gegebenenfalls blinkend leuchten:
Warten auf Fingerabdruck → blau pulsierend (2sek Abstand)
Fingerabdruck wird gelesen → weiß pulsierend als Lauflicht (rauf und runter)
Fingerabdruck erkannt → GRÜN
Fingerabdruck nicht erkannt → ROT

Das Fingerprint-Scanner-Modul ist mittels eines Kabels 78 mit der Elektronik bzw. Steuereinheit 60 des Unterhaltungsgerätes 24 oder des Unterhaltungsspielgerätes 58 oder des Warenverkaufsautomaten 25 oder Multimediacomputers 36 verbunden.

Wird ein Benutzer/Spieler am Fingerprint-Scanner-Modul erkannt, schickt das Fingerprint-Scanner-Modul ein Signal an die Elektronik des Unterhaltungsgeräts 24. Die Steuerung des Unterhaltungsgeräts 24 erkennt diesen Impuls und schaltet den Banknoten-Akzeptor bzw. die Geldscheineingabe für eine bestimmte Zeitspanne, beispielsweise 58 Sekunden, frei. Das Fingerprint-Modul gibt lediglich einen Impuls an die Elektronik der Maschine. Nach Ablauf dieser Zeit wird der Banknoten-Akzeptor wieder offline geschalten, d.h. eine Geldscheinannahme wird verweigert.

Um weitere Banknoten dem Unterhaltungsgerät 24 zuführen zu können, muss sich der Spieler erneut auf dem Fingerprint-Modul identifizieren.

Um einen Spieler/Benutzer in das Modul einlernen zu können bzw. dem Speicher 79 hinzuzufügen, kann von einer autorisierten Person ein Schlüsselschalter 80 mit einem entsprechenden Schlüssel 81 aktiviert werden, wobei in diesem Fall jene Zeit abzuwarten ist, bis die LED-Beleuchtung das Fingerprint-Moduls GRÜN leuchtet. Ist das der Fall, kann der Schlüsselschalter 80 wieder zurück in die Ausgangsstellung geschaltet werden. Das Fingerpint-Modul ist in einen HINZUFÜGEN-Modus gebracht und der nächste von einer Person zugeführte Fingerabdruck wird in der Berechtigungsliste bzw. dem Speicher 79 hinzugefügt. Die Person (der Spieler) legt alsdann seinen Finger auf das Fingerprint-Modul bzw. den Fingerabdrucksensor 73 und ein Template des Fingerabdruckes wird in den Speicher 79 des Fingerprint-Moduls geschrieben. Die Zeitspanne in der der Schlüsselschalter zum Einlernen des Benutzers in das Modul aktiviert ist, bis die LED-Beleuchtung das Fingerprint-Moduls GRÜN leuchtet, wird durch Zeiterfassungsmittel 83, beispielsweise in Form eines so genannten Timers, überwacht. Die Zeiterfassungsmittel 83 können insbesondere alle im Zusammenhang mit dem Schlüsselschalter 80 stehenden Zeitspannen, beispielsweise während des Umschaltens von dem einen Modus in einen anderen Modus, überwachen und steuern.

Um einen Spieler aus dem Speicher 79 des Fingerprint-Moduls zu löschen geht man wie folgt vor. Man lernt/lädt (wie im ersten Schritt beschrieben) den Fingerabdruck des Benutzers (Kunden) der gelöscht werden soll nochmals in das Modul ein. Somit ist dieser gerade eingelernte Fingerabdruck der zuletzt hinzugefügte im Speicher 79. Nun dreht man den Schlüsselschalter 80 um und wartet bis die LED-Beleuchtung des Fingerprint-Moduls ORANGE aufleuchtet - das Fingerpint-Modul ist in einen ENTFERNEN-Modus gebracht. Ist das der Fall, kann sodann der Schlüsselschalter 80 wieder in die Ausgangsstellung zurück geschaltet werden, woraufhin der zuletzt eingelernte (gespeicherte) Fingerabdruck als Referenz verwendet wird, um einen bereits im Speicher 79 gespeicherten identischen Eintrag zu identifizieren und alle Instanzen aus dem Speicher 79 zu löschen.

Um den gesamten Speicher 79 des Fingerprint-Moduls zu leeren geht man wie folgt vor. Man aktiviert den Schlüsselschalter 80 und wartet bis die LED-Beleuchtung des Fingerprint-Scanners ROT aufleuchtet. In diesem Augenblick dreht man den Schlüsselschalter 80 wieder zurück in die Ausgangsstellung und das Fingerprint-Modul aktiviert einen Vorgang zum Löschen des gesamten Speichers 79.

Eine Registrierung des Fingerabdruckes eines Benutzers ist somit nur durch eine zertifizierte Person vornehmbar, welche die persönlichen Daten des Benutzers, insbesondere dessen Berechtigungen, überprüft, wonach sichergestellt ist, dass bei einer Übereinstimmung des von der Aufnahmeeinrichtung 22 aufgenommenen Fingerabdruckes mit den entsprechenden Vergleichsdaten nur ein zum Spielen mit dem Unterhaltungsgerät 24 berechtigter Benutzer das Unterhaltungsgerät 24 aktiviert.

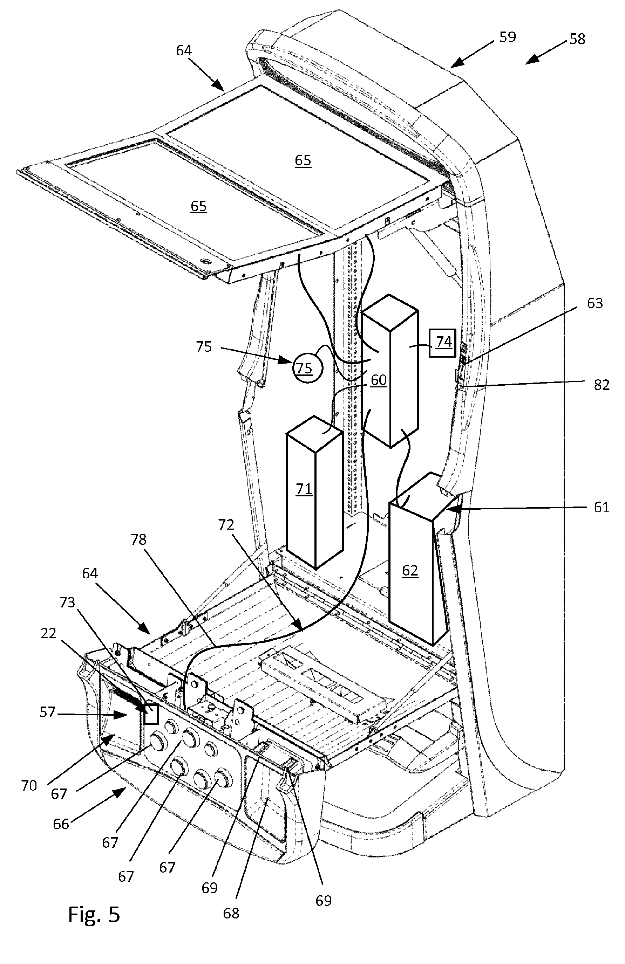

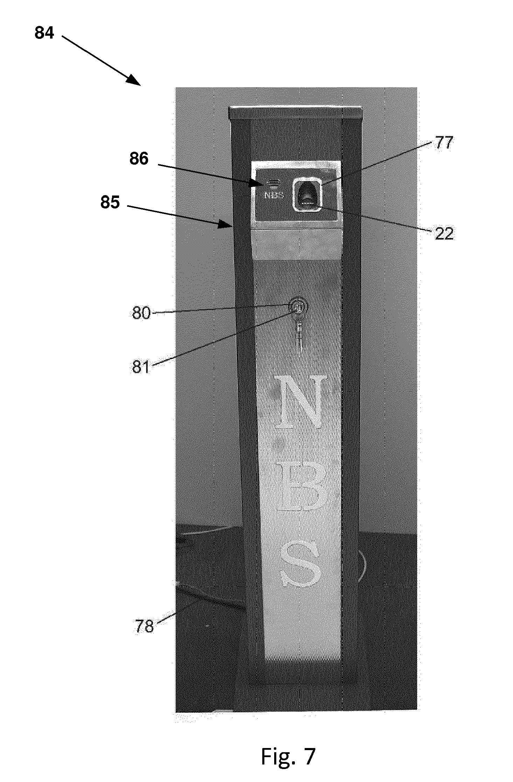

Selbstverständlich ist das zuvor erläuterte Fingerprint-Scanner-Modul nicht nur Zusammen mit dem Unterhaltungsgerät 24 nutzbar, sondern kann auch in das in den Fig. 5 und 6 beschriebene Unterhaltungsspielgerät 58 installiert werden oder ist gemäß Fig. 7 als eine separate Fingerprint-Scanner-Einrichtung 84 ausgebildet, die mit einem entsprechenden Gerät verbunden wird. Die Fingerprint-Scanner-Einrichtung 84 umfasst neben dem zuvor beschriebenen Fingerprint-Scanner-Modul im Wesentlichen ein Modul-Gehäuse 85 mit dem Schlüsselschalter 80 und der von dem LED-Leuchtband 77 umgebenen Aufnahmeeinrichtung 22. Im Weiteren ist eine Lautsprechereinrichtung 86 zur Wiedergabe von akustischen Signalen bzw. Sprachanweisungen in dem Modul-Gehäuse 85 untergebracht. Nach der Aktivierung der Nutzungsberechtigung stehen dem Benutzer die zuvor erläuterten spielrelevanten Funktionen des Unterhaltungsgerätes 24 zur Verfügung. Im Weiteren kann der Benutzer ein zuvor mit der Speichertaste 10 gespeichertes Guthaben mittels Betätigung einer Taste 23 abrufen und so sein aktuelles Guthaben durch das gespeicherte Guthaben vorhergehender Spiele aufstocken. Die Deaktivierung der Nutzungsberechtigung des Unterhaltungsgerätes erfolgt nach dem kein ausreichendes Guthaben für ein weiteres Spiel vorhanden ist oder nach Betätigung der Speichertaste 10, die eine permanente Speicherung des Guthabens in der Steuereinheit 60 des Unterhaltungsgerätes zur folge hat.

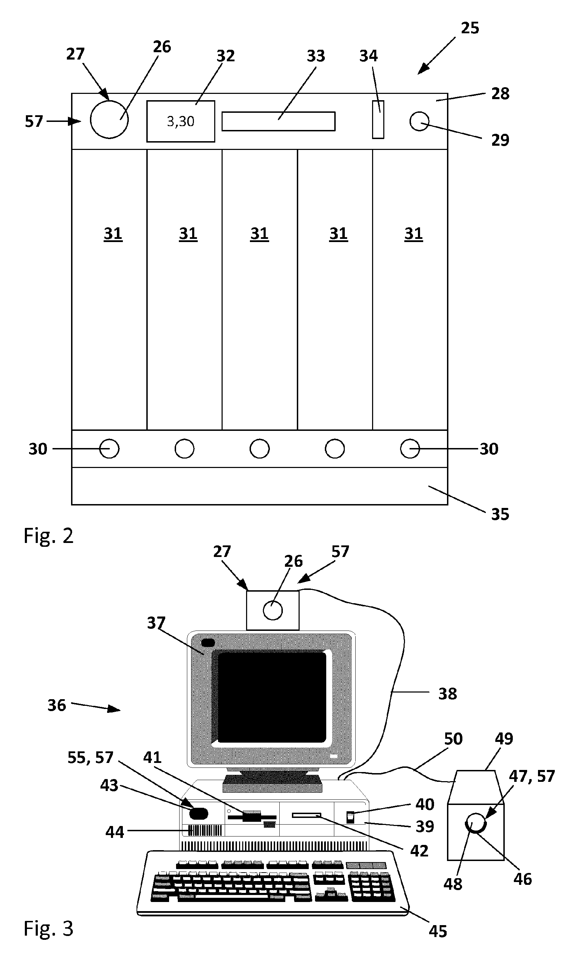

Das geldwertbetätigte Gerät gemäß Fig. 2 ist als Warenverkaufsautomat 25 ausgebildet, der insbesondere zur Abgabe solcher Waren dient, deren Abgabe einer Altersbeschränkung unterliegen, weshalb die Nutzung dieses Warenverkaufsautomaten 25 nicht jedem Benutzer gestattet sein darf. Zur Kontrolle der Nutzungsberechtigung eines Benutzers des Warenverkaufsautomaten 25 ist eine als Kamera 26 ausgebildete Bildaufnahmeeinrichtung 27 als Erkennungseinrichtung 57 in einer Frontplatte 28 des Warenverkaufsautomaten 25 integriert. Hiernach trifft der Benutzer eine Auswahl unter den angebotenen Waren durch die Betätigung eines Auswahlschalters 30 die jeweils unterhalb eines Warenschachtes 31 angeordnet ist. Nach erfolgter Auswahl der Waren werden die zu entrichtenden Kosten in einem Anzeigefenster 32 dargestellt. Der Benutzer kann die entstehenden Kosten begleichen, indem er entweder eine entsprechende Guthabenkarte in einen Karten- Eingabeschlitz 33 einführt oder einen entsprechenden Geldwert in Münzen in einen Münzeinwurfschlitz 34 eingibt. Der Karten- Eingabeschlitz 33 sowie der Münzeinwurfschlitz 34 sind mit einer nicht dargestellten Geldverarbeitungseinrichtung bez. Geldwertverarbeitungseinrichtung gekoppelt, die nach einer Übereinstimmung der entstandenen Kosten mit dem eingegebenen Betrag eine Freigabe des Warenschachtes 31 bewirkt, wonach die Ware einem Ausgabefach 35 zu entnehmen ist.

Ein geldbetätigtes Gerät, das entsprechend Fig. 3 als Multimediacomputer 36 ausgestaltet ist, umfasst einen Bildschirm 37 auf dem die als Kamera 26 ausgebildete Bildaufnahmeeinrichtung 27 angeordnet ist. Die Kamera 26 steht über eine Verbindungsleitung 38 mit einer in einem Gehäuse 39 des Multimediacomputers 36 befestigten Schnittstelle in Verbindung. Das Gehäuse umfasst neben einem Ein-/Ausschalter 40 ein Laufwerk 41 führen austauschbar Speichermedien sowie einen Karten-Eingabeschlitz 42 für Guthabenkarten, der mit einer nicht dargestellten Geldwertverarbeitungseinrichtung gekoppelt ist. Darüber hinaus sind in das Gehäuse 39 eine als Mikrofon 43 ausgebildete Tonaufnahmeeinrichtung 55 sowie ein Lautsprecher 44 integriert. Ferner weist der Multimediacomputer 36 Schnittstellen für eine alphanumerische Tastatur 45 und eine als Flächensensor 46 ausgebildete Aufnahmeeinrichtung 47 zur Aufnahme eines Fingerabdruckes eines Benutzers des Multimediacomputers 36 auf.

Der Flächensensor 46 ist in einer einen Finger des Benutzers zumindest teilweise aufnehmenden Öffnung 48 eines separat von dem Multimediacomputer 36 aufzustellenden Gehäuses 49 installiert und über eine Leitung 50 mit der entsprechenden Schnittstelle verbunden.

Nach dem Einschalten des Multimediacomputers 36 der Benutzer aufgefordert eine Guthabenkarten in den Karten-Eingabeschlitz 42 einzuführen und seinen Finger in der Öffnung 48 zu platzieren. Hiernach nimmt der Flächensensor 46 dessen Fingerabdruck auf. Diese aktuellen Daten einer Vergleichseinrichtung zugeführt und mit zuvor gespeicherten Vergleichsdaten registrierter Benutzer verglichen. Liegen von dem aktuellen Benutzer des Multimediacomputers 36 Vergleichsdaten vor, erfolgt die Aktivierung der Nutzungsberechtigung des Multimediacomputers 36 bei Übereinstimmung des aufgenommenen Fingerabdruckes mit den entsprechenden Vergleichsdaten. Die Speicherung der Vergleichsdaten erfolgt nach einer Registrierung des Benutzers unteren Angaben dessen relevanter persönlicher Daten, die eine ordnungsgemäße Benutzung des Multimediacomputers 36 sicherstellen.

Nach der Aktivierung der Nutzungsberechtigung ist der Benutzer legitimiert die auf dem Multimediacomputer 36 vorhandenen Programme, gegen Abbuchung der entstehenden Kosten von der Guthabenkarte, auszuführen.

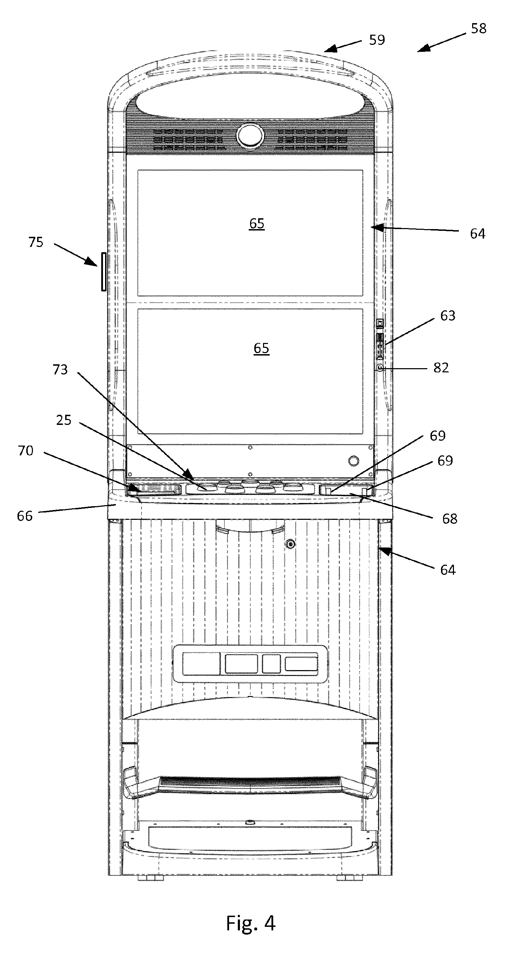

Das als Unterhaltungsspielgerät 58 nach den Fig. 4 und 5 ausgebildete Gerät umfasst ein Standgehäuse 59, in dem die rechnergesteuerte Steuereinheit 60 untergebracht ist, die eine Spielablaufsteuerung umfasst und mit einer Geldwertverarbeitungseinrichtung 61 gekoppelt ist, wobei die Geldwertverarbeitungseinrichtung 61 einen nicht näher dargestellten Münzprüfer, eine Münzkasse 62 und eine Münzauszahleinheit umfasst. Der Münzprüfer ist über einen Münzschacht mit einem Geldeinwurfschlitz 63 verbunden. Unterhalb des Geldeinwurfschlitzes 63 befindet sich eine Rückgabetaste 82, um in bekannter Weise Geld auszuzahlen.

Zum Verschließen des Standgehäuses 59 sind zwei gegenläufig schwenkbare Frontklappen 64 vorgesehen, die über entsprechende Scharniere angelenkt. In der einen Frontklappe 64 sind zwei übereinander angeordnete Bildschirme 65 untergebracht, die zur Darstellung von Spielinhalten und/oder anderen optisch wahrnehmbaren Inhalten dienen und mit der Spielablaufsteuerung verbunden sind. Die Bildschirme 65 können beliebig ausgestaltet sein, insbesondere als TFT-, und/oder LED- und/oder OLED- und/oder Plasma-Anzeigen oder dergleichen. An einer Oberkante der anderen Frontklappe 64 befindet sich ein Pult 66 In dem Pult 66 befinden sich in etwa mittig mehrere Bedienelemente 67, die über eine elektrische Verbindungsleitung 72 mit der Steuereinheit 60 verbunden sind.

Seitlich der Bedienelemente 67 ist einerseits eine Geldausgabeschale 68, die im geschlossenen Zustand der Frontklappen 64 über Schlitze 69 mit der Geldwertverarbeitungseinrichtung 61 in Wirkverbindung steht, und andererseits eine Geldscheineingabe-/ Geldscheinausgabeschale 70, die einen Scheinschlitz aufweist und im geschlossenen Zustand der Frontklappen 64 mit einer Geldscheinverarbeitungseinheit 71 der Geldwertverarbeitungseinrichtung 61 in Verbindung steht, in dem Pult 21 untergebracht, wobei die Geldscheinverarbeitungseinheit 71 beispielsweise eine Geldscheinkasse und/oder einen Dispenser umfasst und mit der Steuereinheit 60 verbunden ist.

Um das Spielen an diesem Unterhaltungsspielgerät 58 nur ausgewählten Benutzern zu gestatten, ist in dem Pult 66 ein Fingerabdrucksensor 73 der Erkennungseinrichtung 57 zur Aufnahme eines Fingerabdrucks eines Benutzers, der beispielsweise Bestandteil eines zuvor beschriebenen Fingerprint-Scanner-Moduls ist, untergebracht. Der Fingerabdrucksensor 73 ist über die elektrische Verbindungsleitung 72, die das Kabel 78 umfasst, mit der Steuereinheit 60 gekoppelt, die wiederum mit einem Speichermedium 74 für Vergleichsdaten, zum Vergleichen des aufgenommenen Fingerabdrucks mit einem registrierten Fingerabdruck, in Verbindung steht, wobei die Steuereinheit 60 ein Bestandteil der Einrichtung zur Kontrolle und Aktivierung einer Nutzungsberechtigung ist. Das Speichermedium 74 kann dem Speicher 79 des Fingerprint-Scanner-Moduls entsprechen. Um neue Benutzer durch die Speicherung ihres Fingerabdrucks zu registrieren, sind Mittel zum Hinzufügen von Vergleichsdaten in das Speichermedium 74 vorhanden, wobei die Mittel neben dem Fingerabdrucksensor 73 insbesondere eine Eingabeeinrichtung, beispielsweise in Form der Bedienelemente 67, zur Kommunikation mit der Steuereinheit 60 umfassen. Um die Eingabe und Speicherung von Vergleichsdaten zu starten, ist ein mit der Steuereinheit 60 verbundener Schlüsselschalter 75 vorgesehen, durch dessen Betätigung das Unterhaltungsspielgerät 58 aus einem Betriebsmodus in einen Lernmodus umgeschaltet wird. In dem Lernmodus wird ein Fingerabdruck eines Benutzers erfasst und dessen relevante Daten werden in dem Speichermedium hinterlegt. Im Weiteren ist in dem Lernmodus auch ein Löschen von gespeicherten Fingerabdrücken möglich. Der Schlüssel des Schlüsselschalters 75 ist üblicherweise im Besitz des Aufsichtspersonals, das mit dem zu registrierenden Benutzer an dem Unterhaltungsspielgerät die Erkennungseinrichtung 57 betätigt. Befindet sich das Unterhaltungsspielgerät 58 in dem Betriebsmodus, dann kann ein Benutzer seinen Finger mit dem Fingerabdrucksensor 73 zur Erfassung seines Fingerabdrucks in Verbindung bringen, wodurch neben der Erfassung des Fingerabdrucks auch ein Vergleich mit in dem Speichermedium 74 vorhandenen Vergleichsdaten stattfindet. Ist der erfasste registriert, also gespeichert, dann erhält der Benutzer eine Nutzungsberechtigung und kann das Unterhaltungsspielgerät innerhalb einer bestimmten Zeitspanne durch Bezahlung in Betrieb nehmen. Ist der der Fingerabdruck unter den Vergleichsdaten nicht vorhanden, dann wird die Nutzungsberechtigung nicht erteilt und eine Einzahlung wird sofort wieder ausgezahlt.

Das Aufsichtspersonal kann demnach durch eine sorgfältige Auswahl bei der Hinterlegung von Vergleichsdaten sicherstellen, welcher Benutzer das Unterhaltungsspielgerät 58 bestimmungsgemäß verwenden darf.

Unter dem in der vorliegenden Beschreibung verwendeten Begriff "Geld" sind alle geldwerten Zahlungsmittel zu subsumieren, die in der Anmeldung ebenfalls erwähnt werden und beispielsweise als Token, Jetons, Wertkarten, Gutscheine und dergleichen bekannt sind.

### Bezugszeichen

- 1.: Frontscheibe
- 2.: Ablesefenster
- 3.: Symbol-Spieleinrichtung
- 4.: Gehäuse
- 5.: Umlaufkörper
- 6.: Symbole
- 7.: Taste
- 8.: Ausgabeschale
- 9.: Guthabenanzeige
- 10.: Speichertaste
- 11.: Risiko-Spieleinrichtung
- 12.: Risikoleiter
- 13.: Anzeigefeld
- 14.: Totalverlust-Anzeigefeld
- 15.: Sonderspiele-Anzeige
- 16.: Risikotaste
- 17.: Münzeinwurfschlitz
- 18.: Tokeneinwurfschlitz
- 19.: Geldschein-Eingabeschlitz
- 20.: Karten-Eingabeschlitz
- 21.: Start-Schalter
- 22.: Aufnahmeeinrichtung
- 23.: Taste
- 24.: Unterhaltungsgerät
- 25.: Warenverkaufsautomat
- 26.: Kamera
- 27.: Bildaufnahmeeinrichtung
- 28.: Frontplatte
- 29.: Starttaste
- 30.: Auswahltaste
- 31.: Warenschacht
- 32.: Anzeigefenster
- 33.: Münzeinwurfschlitz
- 34. 35.: Ausgabefach
- 36.: Multimediacomputer
- 37.: Bildschirm
- 38.: Verbindungsleitung
- 39.: Gehäuse
- 40.: Ein-/Ausschalter
- 41.: Laufwerk
- 42.: Karten-Eingabeschlitz
- 43.: Mikrofon
- 44.: Lautsprecher
- 45.: Tastatur
- 46.: Flächensensor
- 47.: Aufnahmeeinrichtung
- 48.: Öffnung
- 49.: Gehäuse
- 50.: Leitung
- 51.: Datenleitung
- 52.: Zentralrechner
- 53.: Aufnahmeeinrichtung
- 54.: Bildaufnahmeeinrichtung
- 55.: Tonaufnahmeeinrichtung
- 56. 57.: Erkennungseinrichtung
- 58.: Unterhaltungsspielgerät
- 59.: Standgehäuse
- 60.: Steuereinheit
- 61.: Geldwertverarbeitungseinrichtung
- 62.: Münzkasse
- 63.: Geldeinwurfschlitz
- 64.: Frontklappe
- 65.: Bildschirm
- 66.: Pult
- 67.: Bedienelement
- 68.: Geldausgabeschale
- 69.: Schlitz
- 70.: Geldscheineingabe-/ Geldscheinausgabeschale
- 71.: Geldscheinverarbeitungseinheit
- 72.: Verbindungsleitung
- 73.: Fingerabdrucksensor
- 74.: Speichermedium
- 75.: Schlüsselschalter
- 76.: Einrichtung
- 77.: LED-Leuchtband
- 78.: Kabel
- 79.: Speicher
- 80.: Schlüsselschalter
- 81.: Schlüssel
- 82.: Rückgabetaste
- 83.: Zeiterfassungsmittel/Timer
- 84.: Fingerprint-Scanner-Einrichtung
- 85.: Modul-Gehäuse
- 86.: Lautsprechereinrichtung

## Patentansprüche

1. Geldwertbetätigtes Gerät mit einer Einrichtung (76) zur Kontrolle und Aktivierung einer Nutzungsberechtigung, einer Geldwertverarbeitungseinrichtung (61) und einer rechnergesteuerten Steuereinheit (60), wobei die Einrichtung (76) zur Kontrolle der Nutzungsberechtigung eine Erkennungseinrichtung (57) zur Aufnahme eines biometrischen Merkmals eines Benutzers und eine Vergleichseinrichtung zum Vergleich des aufgenommenen biometrischen Merkmals mit in einem Speicher (79) gespeicherten Vergleichsdaten umfasst, wobei die Aktivierung der Nutzungsberechtigung bei Übereinstimmung des aufgenommenen biometrischen Merkmals mit den gespeicherten Vergleichsdaten erfolgt; und wobei Mittel zum Hinzufügen und/oder Entfernen von Vergleichsdaten von Benutzern in/aus den/dem Speicher (79) vorgesehen sind.

2. Geldwertbetätigtes Gerät nach Anspruch 1, **dadurch gekennzeichnet, dass** die Mittel zum Hinzufügen und/oder Entfernen von Vergleichsdaten durch einen Schlüsselschalter (75, 80) oder eine Fernbedienungseinrichtung aktivierbar sind.

3. Geldwertbetätigtes Gerät nach Anspruch 1, **dadurch gekennzeichnet, dass** die Erkennungseinrichtung (57) eine Aufnahmeeinrichtung (22) zur Aufnahme eines Fingerabdruckes eines Benutzers umfasst.

4. Geldwertbetätigtes Gerät nach Anspruch 3, **dadurch gekennzeichnet, dass** die Aufnahmeeinrichtung (22) als eine Kamera oder ein Flächensensor (46) ausgebildet ist.

5. Geldwertbetätigtes Gerät nach Anspruch 3 oder 4, **dadurch gekennzeichnet, dass** die Aufnahmeeinrichtung (22) in einen Ein-/Ausschalter (40) oder in einen Auswahlschalter (30) oder ein Gehäuseteil des Gerätes integriert ist.

6. Geldwertbetätigtes Gerät nach einem der Ansprüche 3 bis 5, **dadurch gekennzeichnet, dass** die Aufnahmeeinrichtung (22) in einer einen Finger zumindest teilweise aufnehmende Öffnung (48) eines Gehäuses (49) installiert ist.

7. Geldwertbetätigtes Gerät nach Anspruch 1 oder 2, **dadurch gekennzeichnet, dass** die Vergleichsdaten zur Aktivierung der Nutzungsberechtigung auf einem lokalen Speichermedium (74) gespeichert sind.

8. Geldwertbetätigtes Gerät nach Anspruch 7, **dadurch gekennzeichnet, dass** das Speichermedium (74) fest installiert oder austauschbar ist.

9. Geldwertbetätigtes Gerät nach Anspruch 1, **dadurch gekennzeichnet, dass** die Geldwertwertverarbeitungseinrichtung (61) einen Münz- und/oder Geldscheinprüfer und/oder Papierticketprüfer und/oder ein Kartenlesegerät umfasst.

10. Geldwertbetätigtes Gerät nach einem der Ansprüche 1 bis 9, **gekennzeichnet durch** eine Ausgestaltung als Unterhaltungsspielgerät (24, 58), Multimediacomputer (36), Warenverkaufsautomat (25) oder dergleichen.

11. Geldwertbetätigtes Gerät nach einem der Ansprüche 1 bis 10, **dadurch gekennzeichnet, dass** eine temporäre Deaktivierung der Nutzungsberechtigung zeit- oder tastengesteuert erfolgt.

12. Verfahren zum Betreiben eines geldwertbetätigten Gerätes mit einer Einrichtung (76) zur Kontrolle und Aktivierung einer Nutzungsberechtigung, einer Geldwertverarbeitungseinrichtung (61) und einer rechnergesteuerten Steuereinheit (60), wobei die Einrichtung (76) zur Kontrolle der Nutzungsberechtigung
- eine Erkennungseinrichtung (57) zur Aufnahme eines biometrischen Merkmals eines Benutzers und einen Speicher (79) zur Speicherung des biometrischen Merkmals umfasst, wobei die Erkennungseinrichtung (57) in einem Lernmodus des Gerätes, in dem die Nutzungsberechtigung nicht aktiviert ist, in einer vorgegebenen Zeitspanne das biometrische Merkmal des Benutzers erfasst und in dem Speicher (79) speichert, und in einem Betriebsmodus das biometrische Merkmals eines Benutzers aufnimmt,
- und eine Vergleichseinrichtung zum Vergleich des aufgenommenen biometrischen Merkmals mit in dem Speicher (79) gespeicherten Vergleichsdaten umfasst,
wobei in dem Betriebsmodus des Gerätes die Aktivierung der Nutzungsberechtigung bei Übereinstimmung des aufgenommenen biometrischen Merkmals mit den gespeicherten Vergleichsdaten vorgenommen wird.

13. Verfahren nach Anspruch 12, **dadurch gekennzeichnet, dass** das Gerät mittels eines Schlüsselschalters (75, 80) zum Hinzufügen von biometrischen Merkmalen eines Benutzers in den Speicher (79) in den Lernmodus versetzt wird.

14. Verfahren nach Anspruch 12 oder 13, **dadurch gekennzeichnet, dass** das Gerät nach einer vorgegebenen Zeitspanne selbststätig oder nach einem Betätigen des Schlüsselschalters (75, 80) aus dem Lernmodus in dem Betriebsmodus umschaltet.
